# EUROPÄISCHE PATENTSCHRIFT

(11) **EP 1 778 992 B1**
(45) Veröffentlichungstag und Bekanntmachung des Hinweises auf die Patenterteilung: **18.05.2016**
(21) Anmeldenummer: 05767386.5
(22) Anmeldetag: 24.06.2005
(51) Int. Cl.: F16D 1/076

(54) **VERFAHREN UND VORRICHTUNG ZUM HERSTELLEN EINER VERBINDUNG AN EINER ANTRIEBSWELLE EINES FAHRZEUGS**
METHOD AND DEVICE FOR PRODUCING A LINK ON A DRIVE-SHAFT OF A MOTOR VEHICLE
PROCEDE ET DISPOSITIF POUR PRODUIRE UNE LIAISON SUR UN ARBRE DE TRANSMISSION D'UN VEHICULE

(30) Priorität: 13.08.2004 DE 102004039268
(43) Veröffentlichungstag der Anmeldung: 02.05.2007
(73) Patentinhaber: AUDI AKTIENGESELLSCHAFT, 85045 Ingolstadt (DE)
(72) Erfinder: REHR, Alfred, 85120 Hepberg (DE); PFERSICH, Roland, 85139 Wettstetten (DE); SEEBACHER, Gerald, 85122 Hitzhofen (DE); WITTE, Paul, 85117 Eitensheim (DE)
(74) Vertreter: Lehle, Josef
(86) Internationale Anmeldenummer: PCT/EP2005/006831
(87) Internationale Veröffentlichungsnummer: WO 2006/015658

(56) Entgegenhaltungen:
- EP-A- 0 671 568
- EP-A- 1 340 922
- DE-A1- 10 251 056

## Beschreibung

Die Erfindung betrifft ein Verfahren zum Herstellen einer an einer Antriebswelle eines Fahrzeuges angeordneten und Drehmoment übertragenden Verbindung gemäß dem Oberbegriff des Patentanspruches 1, sowie eine Verbindung nach dem Oberbegriff des Patentanspruches 7, mit dem das Verfahren durchführbar ist.

Eine derartige Verbindung rotierender Teile beschreibt z. B. die EP 0 671 568 B1 anhand einer Antriebsverbindung zwischen einer Kardenwelle eines Kraftfahrzeuges und einem Getriebe. Zur Erzielung eines genauen Rundlaufes der Kardanwelle (oder einer anderen Antriebswelle) relativ zum Flanschteil des Getriebes wird vorgeschlagen, die Verbindung zwischen dem Gelenkaußenteil und dem Flanschteil mit Zentrierkragen mit Presssitz auszubilden. Damit ist zwar ein spielfreier Zusammenbau der Verbindung gegeben, jedoch ist dazu eine Fertigung mit sehr engen Toleranzen erforderlich; auch können bei der Montage der Verbindung relativ hohe Einschub- oder Ausziehmomente auftreten. Ferner können an den einzelnen Bauteilen gegebenenfalls vorhandene Restunwuchten nicht ausgeglichen werden.

Aufgabe der Erfindung ist es, eine Verfahren zum Herstellen einer Verbindung der gattungsgemäßen Art vorzuschlagen, die fertigungstechnisch und funktionell günstiger ist und die eine einfachere Montage ermöglicht. Ferner wird eine bevorzugte Vorrichtung zur Durchführung des Verfahrens aufgezeigt.

Die verfahrensgemäße Aufgabe wird mit den Merkmalen des Patentanspruches 1 oder des Patentanspruches 7 gelöst. Vorteilhafte Weiterbildungen der Erfindung und eine bevorzugte Vorrichtung zum Herstellen der Verbindung sind den weiteren Patentansprüchen entnehmbar.

Erfindungsgemäß wird vorgeschlagen, dass von zumindest einem der Bauteile eine definierte Restunwucht ermittelt und umfangsseitig markiert wird und dass das Bauteil derart im Rahmen der Spielpassung desachsiert zum anderen Bauteil befestigt wird, dass sich die Restunwucht mit dem Rundlauffehler im Wesentlichen ausgleicht. Daraus resultiert zunächst eine einfachere Fertigung, weil die Bauteile in Spielpassung hergestellt werden können. Beim in der Regel ohnehin erforderlichen Auswuchten der Bauteile kann eine definierte Restunwucht akzeptiert werden, deren Lage markiert wird. Sodann wird bei der Montage sichergestellt, dass die bei einer Spielpassung in der Regel auftretende Desachsierung des einen Bauteils zum anderen gezielt derart erfolgt, dass sich die rotatorische Unwucht durch die Desachsierung mit der Restunwucht des oder der Bauteile ausgleicht.

In Weiterbildung der Erfindung kann von beiden Bauteilen eine definierte Restunwucht ermittelt und markiert werden, wobei die Markierungen bei der Montage zumindest im Wesentlichen in Überdeckung gebracht werden. Dies erhöht die Laufruhe der Bauteile im Verbindungsbereich und vereinfacht die Montage bzw. die Zuordnung der Bauteile.

Dabei können die Markierungen der Restunwuchten der beiden Bauteile um einen gleichen Winkelbereich im Uhrzeigersinn und Gegenuhrzeigersinn gegenüber der jeweiligen Unwuchtlage versetzt aufgebracht werden. Damit bilden die beiden Restunwuchten der Bauteile mit der definierten Desachsierung bzw. der dynamischen Unwucht ein umlaufendes Dreieck mit im günstigsten Falle freien Massenmomenten gleich Null. Die Markierungen der beiden Bauteile können bevorzugt um jeweils 60 Grad zur Unwuchtlage versetzt werden und somit jeweils um 120 Grad versetzt zueinander und zur Desachsierung liegen.

Des weiteren können die ringförmigen Anlageflächen der Bauteile derart ausgeführt sein, dass bei einem einseitigen Anziehen einer der Schrauben bei der Montage eine definierte Desachsierung der Bauteile zueinander erzeugt wird. Damit ist eine gezielte Desachsierung bei einer einfach durchzuführenden Montage sichergestellt.

Dabei kann ein radial außen liegender Bereich der ringförmigen Anlageflächen der Bauteile derart axial zurückgesetzt ausgeführt werden, dass bei einem Anziehen der den Markierungen am nächsten liegenden Schraube die besagte Desachsierung erzeugt wird. Auch diese Maßnahme vereinfacht wesentlich die Montage und stellt die konstruktiv beabsichtigte Position der Desachsierung zu den markierten Restunwuchten der Bauteile sicher.

Bei der bevorzugten Verbindung wird vorgeschlagen, die ringförmige Anlagefläche eines oder beider Bauteile zumindest im Bereich der Schrauben und radial nach außen bis zum Zentrierkragen zurückgesetzt auszuführen. Diese Maßnahme ist fertigungstechnisch einfach herstellbar und bewirkt beim einseitigen Anziehen einer der Schrauben der Verbindung ein Verkippen des zu befestigenden Bauteiles mit einer definierten Desachsierung innerhalb des Zentrierkragens.

Die ringförmige Anlagefläche eines Bauteiles kann dazu z. B. konisch gestaltet sein; bevorzugt wird jedoch vorgeschlagen, die Anlagefläche im Querschnitt gesehen gestuft auszubilden, mit einer ringförmigen Vertiefung radial nach außen bis zum Zentrierkragen. Der Zentrierkragen kann bevorzugt am Flanschteil angeordnet sein.

Ferner kann vorteilhaft zwischen den Bauteilen bzw. deren Anlageflächen eine radial innerhalb der Schrauben liegende Scheibe beigelegt sein, die die besagte Vertiefung definiert. Daraus resultiert eine vereinfachte Fertigung, bei der die Vertiefung sich automatisch durch das Einbringen der besagten Scheibe ergibt.

Die Scheibe kann ferner zur einfachen Herstellung einer Dichtfunktion an ihrem Außenumfang einen an den Anlageflächen anliegenden Dichtring tragen.

Schließlich kann die Scheibe tellerförmig als Kappe ausgeführt sein, die das Gelenk als das eine Bauteil in axialer Richtung zum Flanschteil hin abschließt.

Ein Ausführungsbeispiel der Erfindung ist im Folgenden mit weiteren Einzelheiten näher erläutert. Die schematische Zeichnung zeigt in:
- **Fig. 1**: eine Drehmoment übertragende Verbindung zwischen einem Flanschteil eines Getriebes und dem Gelenkaußenteil eines Gelenkes einer Kardanwelle in Kraftfahrzeugen, in einem Längsschnitt;
- **Fig. 2**: einen vergrößerten Abschnitt im Fügebereich der Verbindung nach Fig. 1; und
- **Fig. 3**: den Fügebereich gemäß Fig. 2 mit Darstellung der Desachsierung des Gelenkaußenteils relativ zum Flanschteil bei der Montage.

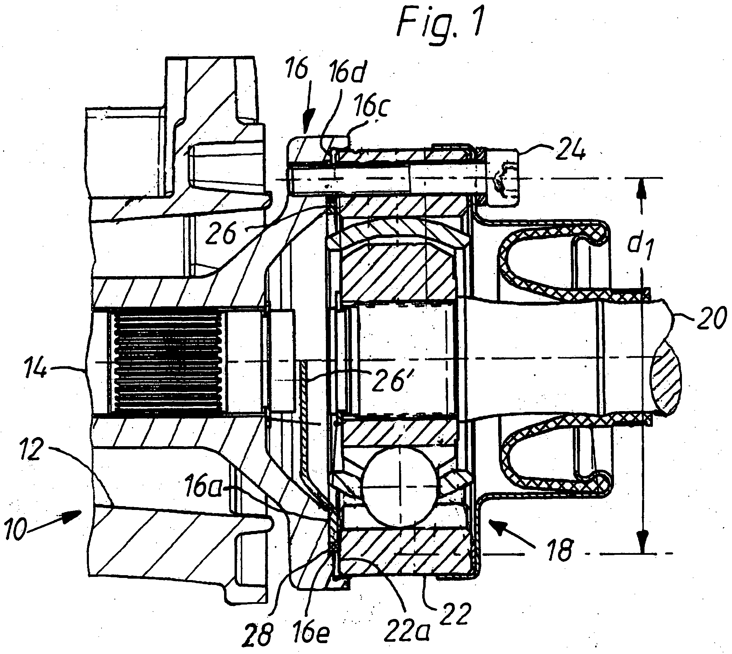

In der **Fig. 1** ist mit 10 ein nur abschnittsweise dargestelltes Differenzialgetriebe bezeichnet, in dessen Getriebegehäuse 12 eine Eingangswelle 14 drehbar gelagert ist. Auf der Eingangswelle 14 ist ein rotationssymmetrisches Bauteil bzw. ein Flanschteil 16 befestigt.

An das Flanschteil 16 ist ein weiteres Bauteil bzw. das Gelenk 18 einer nur abschnittsweise dargestellten Kardanwelle 20 in noch zu beschreibender Weise Drehmoment übertragend angeschlossen.

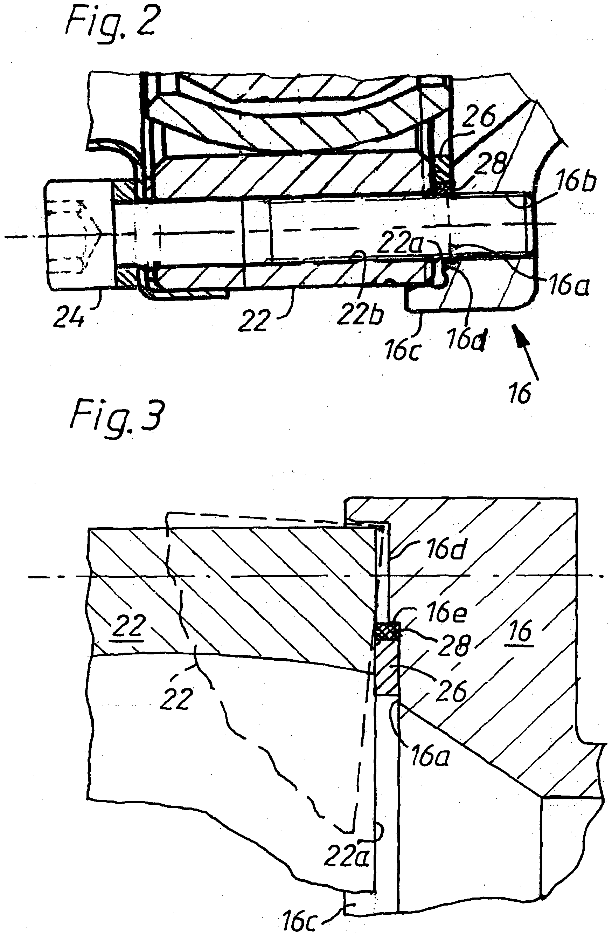

Dazu ist das ringförmige Gelenkaußenteil 22 des Gelenkes 18 (hier ein homokinetisches Gleichlaufgelenk an sich handelsüblicher Bauart) mittels sechs gleichmäßig über dessen Außenumfang verteilter Schrauben 24 mit dem Flanschteil 16 verschraubt, wobei die Schrauben 24 (vgl. auch **Fig. 2**) im Fügebereich (= radiale Trennebene zwischen dem Flanschteil 16 und dem Gelenkaußenteil 22) ringförmige Anlageflächen 16a bzw. 22a durchdringen. Dazu sind in dem Gelenkaußenteil 22 entsprechende Durchgangsbohrungen 22b und in dem Flanschteil 16 entsprechende Gewindebohrungen 16b vorgesehen. Die sechs Schrauben 24 liegen dabei in einem einheitlichen Lochkreis d₁.

Zur Zentrierung des Gelenkaußenteils 22 relativ zum Flanschteil 16 ist am Flanschteil 16 ein die Anlagefläche 16a axial überragender Zentrierkragen 16c angeformt. Der Außendurchmesser des Gelenkaußenteils 22 und der Innendurchmesser des Zentrierkragens 16c sind maßlich als Spielpassung mit einem relativ großen Toleranzband ausgeführt, also montageleicht zusammenschiebbar.

Ferner ist zwischen der Anlagefläche 16a des Flanschteiles 16 und der Anlagefläche 22a des Gelenkaußenteils 22 eine ringförmige Stahl-Scheibe 26 definierter Stärke mit einem an ihrem Außenumfang anvulkanisierten Dichtring 28 (vgl. obere Hälfte der **Fig. 1** **und** **Fig. 2**) beigelegt. Die rotationssymmetrische Scheibe 26 mit dem Dichtring 28 ist so ausgeführt, dass sie mit ihrem Außenumfang innerhalb des Lochkreises d₁ und innerhalb der Schrauben 24 positioniert ist (Scheibenaußendurchmesser = Lochkreisdurchmesser d₁ minus Schraubendurchmesser). Daraus resultiert ein gestufter Verlauf der Anlagefläche 16a, der radial außerhalb der Scheibe 26 mit Dichtring 28 bis hin zum Zentrierkragen 16c entsprechend zurückgesetzt ist bzw. eine ringförmige Vertiefung 16d bildet.

Die Vertiefung 16d kann auch unmittelbar in die Anlagefläche 16a des Flanschteiles 16 oder in die Anlagefläche 22a des Gelenkaußenteils 22 eingearbeitet sein. Gegebenenfalls kann die Anlagefläche 16a und/oder die Anlagefläche 22a nicht gestuft, sondern leicht konisch ausgeführt sein.

Die Scheibe 26 kann wie aus der unteren Hälfte der Zeichnung **Fig. 1** ersichtlich auch in geschlossener Ausführung als tellerförmige Kappe 26' hergestellt sein und somit das Gelenk 18 entsprechend kapseln.

Zudem kann die ringförmige Scheibe 26 oder die Kappe 26' an einer in die Anlagefläche 16a oder 22a eingearbeitete Ringschulter 16e zentriert gehalten sein (**Fig**. **1**). Die Ringschulter 16e umfasst dabei die Scheibe 26 in axialer Richtung um ein Maß, das geringer ist als die Stärke der Scheibe 26 bzw. der Kappe 26'.

Bei der Herstellung der beschriebenen Verbindung wird wie folgt verfahren:
Zunächst wird die Eingangswelle 12 mit dem Flanschteil 14 in einer entsprechenden Vorrichtung (nicht dargestellt) ausgewuchtet und eine gegebenenfalls vorhandene definierte Restunwucht mit einer Markierung (z. B. einem Farbpunkt oder einer Einprägung am Außenumfang des Flanschteiles 16) versehen. Die Markierung (nicht dargestellt) wird jedoch um 60 Grad im Uhrzeigersinn versetzt zur Lage der Restunwucht aufgebracht.

Des gleichen wird die Kardanwelle 20 mit dem Gelenk 18 gewuchtet und ebenfalls die definierte Restunwucht am Außenumfang des Gelenkaußenteils 22 markiert. Die Markierung wird jedoch im Gegenuhrzeigersinn um 60 Grad umfangsversetzt angebracht.

Werden nun bei der Montage der Verbindung die beiden Markierungen in Überdeckung gebracht, so liegen die besagten Restunwuchten 120 Grad versetzt zueinander.

Sodann werden die sechs Schrauben 24 lose in das Flanschteil 16 eingeschraubt und dann die am nächsten zu den Markierungen liegende Schraube 24 mit einem definiertem Drehmoment angezogen. Dieser einseitige Anzug einer Schraube 24 bewirkt im Verbindung mit der vorstehend beschriebenen Ausgestaltung der Anlagefläche 16a mit der Vertiefung 16d ein Verkippen des Gelenkaußenteils 22 (vgl. **Fig. 3****,** in gestrichelten Linien übertrieben dargestellt) relativ zum Flanschteil 16, wodurch sich das Gelenkaußenteil 22 aufgrund der teleskopartigen Führung im Zentrierkragen 16c an der der festgezogenen Schraube 24 diametral gegenüberliegenden Stelle bzw. diesen Umfangsbereich an den Zentrierkragen 16c anlegt bzw. gezielt desachsiert wird.

Werden nunmehr die weiteren Schrauben 24 festgezogen, so bleibt - wie Versuche gezeigt haben - das Gelenkaußenteil 22 in der definiert desachsierten Lage, die dreieckartig der Lage der beiden Restunwuchten bzw. diametral den Markierungen gegenüberliegt. Die durch die Desachsierung des Gelenkes 18 und der Kardanwelle 20 entstehende dynamische Unwucht gleicht die besagten Restunwuchten der Eingangswelle 14 mit Flanschteil 16 und des Gelenkes 18 mit Kardanwelle 20 zumindest im Wesentlichen aus.

Die Erfindung ist nicht auf das beschriebene Ausführungsbeispiel beschränkt. So kann auch nur eine Restunwucht am Flanschteil 16 oder am Gelenk 18 ermittelt und markiert sein. Die Markierung liegt dann genau bzw. ohne Versatz an der Restunwucht, der dann eine diametral gegenüberliegende Desachsierung des Gelenkaußenteils 22 zum Flanschteil 16 wie vorbeschrieben folgt. Gegebenenfalls können die Gewindebohrungen 16b des Flanschteiles 16 und/oder die Durchgangsbohrungen 22b des Gelenkaußenteils 22 erst nach dem Auswuchten und/oder Ermitteln der besagten Restunwuchten eingearbeitet werden, wobei dann eine Gewindebohrung 16b bzw. eine Durchgangsbohrung 22b in eine axiale Flucht mit der besagten Markierung für die Restunwucht gebracht werden kann.

Die beschriebene Verbindung kann ferner auch an anderen rotationssymmetrischen Bauteilen oder Antriebsverbindungen verwendet sein.

## Patentansprüche

1. Verfahren zum Herstellen einer an einer Antriebswelle eines Fahrzeuges angeordneten Drehmoment übertragenden Verbindung zweier im Fügebereich rotationssymmetrischer Bauteile, insbesondere dem Gelenkaußenteil (22) eines Gelenkes (18) einer Antriebswelle und einem Flanschteil (16) einer Getriebewelle, welche Bauteile mittels mehrerer in Umfangsrichtung verteilter Schrauben (24) miteinander verschraubt sind, wobei die Schrauben ringförmige Anlageflächen (16a, 22a) der Bauteile durchstoßen und am einen Bauteil ein ringförmiger Zentrierkragen (16c) angeformt ist, der den Außenumfang des anderen Bauteiles umschließt, **dadurch gekennzeichnet, dass** von zumindest einem der Bauteile (14, 16 bzw. 18, 20) eine definierte Restunwucht ermittelt und umfangsseitig markiert wird und dass das Bauteil (18) derart im Rahmen einer Spielpassung desachsiert zum anderen Bauteil (16) befestigt wird, dass sich die Restunwucht im Wesentlichen aufhebt.

2. Verfahren nach Anspruch 1, **dadurch gekennzeichnet, dass** von beiden Bauteilen (14, 16, 18, 20) eine definierte Restunwucht ermittelt und markiert wird und dass die Markierungen bei der Montage zumindest im Wesentlichen in Überdeckung gebracht werden.

3. Verfahren nach den Ansprüchen 1 und 2, **dadurch gekennzeichnet, dass** die Markierungen der Restunwuchten der beiden Bauteile (14, 16, 18, 20) um einen gleichen Winkelbereich im Uhrzeigersinn und Gegenuhrzeigersinn gegenüber der jeweiligen Unwuchtlage versetzt aufgebracht werden.

4. Verfahren nach Anspruch 3, **dadurch gekennzeichnet, dass** die Markierungen der beiden Bauteile (14, 16, 18, 20) um jeweils 60 Grad zur Unwuchtlage versetzt werden.

5. Verfahren nach einem oder mehreren der vorhergehenden Ansprüche, **dadurch gekennzeichnet, dass** die ringförmigen Anlageflächen (16a, 22a) der Bauteile (16, 22) derart ausgeführt sind, dass bei einem einseitigen Festziehen einer der Schrauben bei der Montage eine definierte Desachsierung der Bauteile (16, 22) zueinander erzeugt wird.

6. Verfahren nach Anspruch 5, **dadurch gekennzeichnet, dass** ein radial außen liegender Bereich (16d) der ringförmigen Anlageflächen (16a, 22a) der Bauteile (16, 22) derart axial zurückgesetzt ausgeführt wird, dass bei einem Anziehen der den Markierungen am nächsten liegenden Schraube (24) die besagte Desachsierung erzeugt wird.

7. An einer Antriebswelle eines Fahrzeuges angeordneten Drehmoment übertragenden Verbindung zweier im Fügebereich rotationssymmetrischer Bauteile, insbesondere dem Gelenkaußenteil (22) eines Gelenkes (18) einer Antriebswelle und einem Flanschteil (16) einer Getriebewelle, welche Bauteile mittels mehrerer in Umfangsrichtung verteilter Schrauben (24) miteinander verschraubt sind, wobei die Schrauben ringförmige Anlageflächen (16a, 22a) der Bauteile durchstoßen und am einen Bauteil ein ringförmiger Zentrierkragen (16c) angeformt ist, der den Außenumfang des anderen Bauteiles umschließt,, **dadurch gekennzeichnet, dass** der Zentrierkragen (16c) den Außenumfang des anderen Bauteils in Spielpassung umschließt, wobei die ringförmige Anlagefläche (16a) eines oder beider Bauteile (16, 22) zumindest im Bereich der Schrauben (24) und radial nach außen bis zum Zentrierkragen (16c) zurückgesetzt ausgeführt ist.

8. Verbindung nach Anspruch 7, **dadurch gekennzeichnet, dass** die ringförmige Anlagefläche (16a) eines Bauteiles (16) im Querschnitt gesehen gestuft ausgebildet ist, mit einer ringförmigen Vertiefung (16d) radial nach außen bis zum Zentrierkragen (16c).

## Claims

1. A process for manufacturing a vehicle torque transmitting connection consisting of two rotationally symmetrical components arranged on a drive shaft in the joining area, in particular an outer joint part (22) of a joint (18) of a drive shaft and a flange part (16) of a transmission shaft, which parts are screwed together by means of a plurality of circumferentially distributed bolts (24), wherein the bolts penetrate annular contact surfaces (16a, 22a) of the components, and where an annular centring collar (16c) is formed on a component which surrounds the outer periphery of the other component, **characterized in that** at least one of the components (14, 16 or 18, 20) establishes a defined residual imbalance marked circumferentially, and that the component (18) is fastened with an axially offset clearance fit to the other component (16) so that the residual imbalance is substantially cancelled out.

2. The process of claim 1, **characterized in that** a defined residual imbalance is established and marked by both components (14, 16, 18, 20), and **in that** the markings are made to overlap at least substantially during assembly.

3. The process according to claims 1 and 2, **characterized in that** the markings of the residual imbalances of the two components (14, 16, 18, 20) are placed at an equal angular range in a clockwise and counter clockwise direction relative to the respective imbalance position.

4. A process according to claim 3, **characterized in that** the markings of the two components (14, 16, 18, 20) are offset by 60 degrees to the imbalance positions.

5. A process according to one or more of the preceding claims, **characterized in that** the annular contact surfaces (16a, 22a) of the components (16, 22) are designed in such a manner that a one-sided tightening of one of the bolts during assembly produces a defined axial offset of the components (16, 22) with respect to each other.

6. A process according to claim 5, **characterized in that** a radially located outer area (16d) of the annular contact surfaces (16a, 22a) of the components (16, 22) is set back axially in such a manner that said axial offset is produced by tightening the bolts (24) closest to the markings.

7. A vehicle torque transmitting connection consisting of two rotationally symmetrical components arranged on a drive shaft in the joining area, in particular the outer joint part (22) of a joint (18) of a drive shaft and a flange part (16) of a transmission shaft, which parts are screwed together by means of a plurality of circumferentially distributed bolts (24), wherein the bolts penetrate annular contact surfaces (16a, 22a) of the components, and where an annular centring collar (16c) is formed on a component which surrounds the outer periphery of the other component, **characterized in that** the centring collar (16c) surrounds the outer periphery of the other component with a clearance fit, wherein the annular contact surface (16a) of one or both components (16, 22) is set back axially at least in the area of the bolts (24) and radially outwards up to the centring collar (16c).

8. A connection according to claim 7, **characterized in that** an annular contact surface (16a) of a component (16) is formed stepwise as seen in cross section, with an annular recess (16d) extending radially outward up to the centring collar (16c).

## Revendications

1. Procédé de fabrication d'une liaison transférant un couple de torsion agencée sur un arbre d'entraînement d'un véhicule entre deux composants à symétrie de rotation dans la zone de jonction, en particulier la partie externe (22) d'une articulation (18) d'un arbre d'entraînement et une partie bridée (16) d'un arbre de transmission, lesquels composants sont vissés l'un à l'autre au moyen de plusieurs vis (24) réparties dans la direction périphérique, dans lequel les vis traversent des surfaces d'appui annulaires (16a, 22a) des composants et il est formé sur un composant un collet de centrage annulaire (16c) qui entoure la périphérie externe de l'autre composant, **caractérisé en ce qu'**un balourd résiduel défini est déterminé par au moins l'un des composants (14, 16 ou 18, 20) et est marqué côté périphérie et le composant (18) est fixé à l'autre composant (16) dans le cadre d'un ajustement avec jeu de manière assez désaxée pour que le balourd résiduel se neutralise sensiblement.

2. Procédé selon la revendication 1, **caractérisé en ce qu'**un balourd résiduel défini est déterminé par les deux composants (14, 16, 18, 20) et marqué et les marquages sont au moins sensiblement recouverts lors du montage.

3. Procédé selon les revendications 1 et 2, **caractérisé en ce que** les marquages des balourds résiduels des deux composants (14, 16, 18, 20) sont appliqués de manière décalée d'une zone angulaire égale dans le sens des aiguilles d'une montre et dans le sens inverse des aiguilles d'une montre par rapport à la position respective des balourds.

4. Procédé selon la revendication 3, **caractérisé en ce que** les marquages des deux composants (14, 16, 18, 20) sont décalés respectivement de 60 degrés par rapport à la position des balourds.

5. Procédé selon une ou plusieurs des revendications précédentes, **caractérisé en ce que** les surfaces d'appui annulaires (16a, 22a) des composants (16, 22) sont conçus de sorte que, lors d'un retrait unilatéral de l'une des vis au cours du montage, il se produise un désaxement défini des composants (16, 22) l'un par rapport à l'autre.

6. Procédé selon la revendication 5, **caractérisé en ce qu'**une zone (16d) située radialement à l'extérieur des surfaces d'appui annulaires (16a, 22a) des composants (16, 22) est conçu axialement de manière à être reculé de sorte que, lors d'un serrage des vis (24) se trouvant le plus près des marquages, ledit désaxement se produise.

7. Liaison transférant un couple de torsion agencée sur un arbre d'entraînement d'un véhicule entre deux composants à symétrie de rotation dans la zone de jonction, en particulier la partie externe (22) d'une articulation (18) d'un arbre d'entraînement et une partie bridée (16) d'un arbre de transmission, lesquels composants sont vissés l'un à l'autre au moyen de plusieurs vis (24) distribuées dans la direction périphérique, dans lequel les vis traversent des surfaces d'appui annulaires (16a, 22a) des composants et il est formé sur un composant un collet de centrage annulaire (16c) qui entoure la périphérie externe de l'autre composant, **caractérisée en ce que** le collet de centrage (16c) entoure la périphérie externe de l'autre composant par ajustement avec jeu, dans lequel la surface d'appui annulaire (16a) d'un ou des deux composants (16, 22) est conçu pour être reculé au moins dans la zone des vis (24) et radialement vers l'extérieur jusqu'au collet de centrage (16c).

8. Liaison selon la revendication 7, **caractérisée en ce que** la surface d'appui annulaire (16a) d'un composant (16) est conçue étagée lorsqu'on l'observe en section transversale, avec un renfoncement annulaire (16d) radialement vers l'extérieur jusqu'au collet de centrage (16c).
